# EUROPÄISCHE PATENTSCHRIFT

(11) **EP 1 034 749 B1**
(45) Veröffentlichungstag und Bekanntmachung des Hinweises auf die Patenterteilung: **05.02.2003**
(21) Anmeldenummer: 99810155.4
(22) Anmeldetag: 22.02.1999
(51) Int. Cl.: A61C 1/08, A61C 19/055

(54) **Zahnärztliches Behandlungsgerät mit einer Parallelführungseinrichtung**
Dental treatment apparatus with a parallel guiding device
Appareil de traitement dentaire pourvu d'un dispositif de guidage parallèle

(43) Veröffentlichungstag der Anmeldung: 13.09.2000
(73) Patentinhaber: Baumgartner, Ernst, Dr., 3073 Gümligen (CH)
(72) Erfinder: Baumgartner, Ernst, Dr., 3073 Gümligen (CH)
(74) Vertreter: BOVARD AG - Patentanwälte

(56) Entgegenhaltungen:
- US-A- 2 299 151
- US-A- 3 063 149
- US-A- 3 152 401
- US-A- 3 254 413

## Beschreibung

Die vorliegende Erfindung bezieht sich auf ein zahnärztliches Behandlungsgerät mit einer Parallelführungseinrichtung gemäss dem Oberbegriff des Patentanspruchs 1.

Zähne, welche eine Krone oder Teilkrone erhalten sollen, müssen leicht konisch präpariert werden. In der Freihandtechnik ist es schwierig, dem zu präparierenden Zahn die gewünschte leichte Konizität zu geben.

Deshalb sind Einrichtungen entwickelt worden, die das parallele Führen eines Behandlungsgerätes mit eingesetztem Werkzeug ermöglichen. Eine derartige Einrichtung ist beispielsweise in der Patentschrift US-A-5 575 646 dargestellt. Diese Einrichtung umfasst einen Ständer, der an der Rücklehne des Patientenstuhls befestigt werden kann, und der mit Parallelführungselementen ausgestattet ist, die das Behandlungsgerät tragen. Mit dieser Einrichtung lassen sich parallele oder konische Flächen am Zahn eines Patienten ausbilden, vorausgesetzt der entsprechende Kiefer des Patienten bleibt bezüglich der Rücklehne des Patientenstuhls in einer fixen Lage. Der Patient darf sich somit während des Behandlungsvorgangs nicht bewegen.

Es sind auch Parallelführungseinrichtungen für ein zahnärztliches Behandlungsgerät bekannt, die temporär am Kiefer des zu behandelnden Patienten befestigt werden können. Ein derartiges Gerät ist beispielsweise aus der Patentschrift US-A-4 344 755 bekannt. Diese Einrichtung besteht aus einem Halteteil, der an Zähnen des Kiefers des zu behandelnden Zahnes mittels einer Masse festgemacht werden kann. An diesem Halteteil sind parallele Lenker angebracht, die einen Zwischenteil tragen, an dem ein Achsstück befestigbar ist, das in seiner Winkellage eingestellt und festgespannt werden kann. Auf dieses Achsstück ist ein Lenker aufgesetzt, der bezüglich diesem Achsstück längsverschiebbar und verschwenkbar ist. Am anderen Ende dieses Lenkers wird der Werkzeugaufnahmeteil des Behandlungsgerätes befestigt.

Mit dieser Einrichtung lassen sich wohl die entsprechenden Flächen am zu behandelnden Zahn bearbeiten. Da sich die Parallelführung bei der Bearbeitung innerhalb des Mundes des Patienten befindet, müssen die Führungen sehr kurz ausgebildet sein, wodurch die Gefahr eines Verkantens entstehen kann. Für den Zahnarzt ergibt sich zusätzlich das Problem, dass die freie Sicht auf den zu behandelnden Zahn durch diese Einrichtung beeinträchtigt ist.

Eine weitere Parallelführungseinrichtung ist aus der Patentschrift US-A-3 152 401 bekannt. Diese wird beim Einsetzen zwischen Oberkiefer und Unterkiefer eingeklemmt und gehalten werden. Der Patient kann in diesem Zustand die Kiefer nicht bewegen, was als unangenehm empfunden wird. Durch die Anordnung der Achsen und Lenker wird einerseits die Einstellung erschwert, andererseits ist dadurch die freie Sicht auf das Arbeitsgerät beim Bearbeiten eines Zahns nicht gewährleistet.

Des weiteren sind auch Einrichtungen bekannt, welche mit Messfühlern ausgestattet sind, und die dem Zahnarzt über Signale angeben, wenn das Behandlungsgerät nicht mehr im richtigen Winkel geführt wird. Als Referenzpunkt dient auch bei diesen Einrichtungen nicht der entsprechende Kiefer des Patienten, was nachteilig ist. Diese Einrichtungen sind zudem sehr teuer.

Die Aufgabe der vorliegenden Erfindung besteht nun darin, ein zahnärztliches Behandlungsgerät mit einer Parallelführung zu schaffen, die einen einfachen Aufbau aufweist und dementsprechend günstig ist, die dem Zahnarzt freie Sicht auf den zu behandelnden Zahn ermöglicht und die vom Patienten nicht als unangenehm empfunden wird.

Erfindungsgemäss erfolgt die Lösung dieser Aufgabe durch die im Anspruch 1 aufgeführten Merkmale.

Für den Patienten ist es vorteilhaft, dass an der Halterung lediglich ein Steg in fixer Lage gehalten ist, und dass sich die beweglichen Führungsteile zur Parallelführung ausserhalb des Mundes befinden.

Ferner besteht das die erste Achse bildende Element aus einem zylindrischen Stift, der am Steg gehalten ist, der mit einer Verdickung versehen ist, wobei diese Verdickung im mittleren Bereich des zylindrisches Stiftes angebracht ist und der Stift somit beidseitig über den Steg vorstehend ist. Dadurch lässt sich dieser Stift einfach ausrichten und mit der vorgesehenen Spannvorrichtung in dieser ausgerichteten Lage fixieren. Des weiteren kann der eine Endbereich des Zwischenstückes mit zwei voneinander beabstandeten Lagerbüchsen ausgestattet sein, in welche der zylindrische Stift so eingesetzt ist, dass die Verdickung zwischen den beiden Lagerbüchsen angeordnet ist, wodurch eine optimale Führung erreicht wird und ein Verkanten dieser Lagerstelle ausgeschlossen ist.

Des weiteren ist der andere Endbereich des Zwischenstücks mit einem zylindrischen Achsstück ausgestattet, welches die zweite Achse bildet und welches in eine weitere Lagerbüchse eingesetzt ist, die am Gehäuse des Behandlungsgerätes angebracht ist. Durch das Anbringen der weiteren Lagerbüchse am Gehäuse des Behandlungsgerätes wird erreicht, dass der Werkzeugaufnahmeteil, in welchem das Werkzeug gehalten ist, frei bleibt und somit die freie Sicht des Zahnarztes auf dieses Werkzeug während des Behandlungsvorgangs gewährleistet ist.

Zusätzlich ist das Zwischenstück aus mindestens zwei Teilen ausgebildet, welche Teile jeweils um eine Schwenkachse schwenkbar miteinander verbunden sind und in Längsrichtung der Schwenkachse relativ zueinander verschiebbar sind, wobei die jeweilige Schwenkachse parallel zur ersten Achse und zur zweiten Achse ausgerichtet ist. Dadurch wird erreicht, dass die Bewegungsfreiheit des Behandlungsgerätes gross ist, sowohl in der Bewegung in der Ebene als auch vertikal dazu. Des weiteren wird die freie Sicht auf den zu behandelnden Zahn noch zusätzlich verbessert.

Weitere vorteilhafte Ausgestaltungen der Erfindung ergeben sich aus den weiteren abhängigen Ansprüchen.

Eine Ausführungsform der vorliegenden Erfindung wird nachfolgend anhand der beiliegenden Zeichnung beispielhaft näher erläutert.

Es zeigt
Fig. 1 eine seitliche Ansicht auf das zahnärztliche Behandlungsgerät mit der Parallelführungseinrichtung im gestreckten Zustand, wobei eine längs der Achsen verschobene Position strichpunktiert dargestellt ist;
Fig. 2 eine Seitenansicht auf das zahnärztliche Behandlungsgerät mit der Parallelführungseinrichtung gemäss Fig. 1, wobei sich die erste Achse in einer winklig verstellten Position befindet;
Fig. 3 eine Draufsicht auf die erfindungsgemässe Einrichtung gemäss Fig. 1, wobei die Schwenkbewegungen und die entsprechenden Achsen jeweils mit einer strichpunktierten Kreislinie angegeben sind; und
Fig. 4 eine Draufsicht auf die erfindungsgemässe Einrichtung, wobei die einzelnen Elemente um die entsprechenden Schwenkachsen verschwenkt sind.

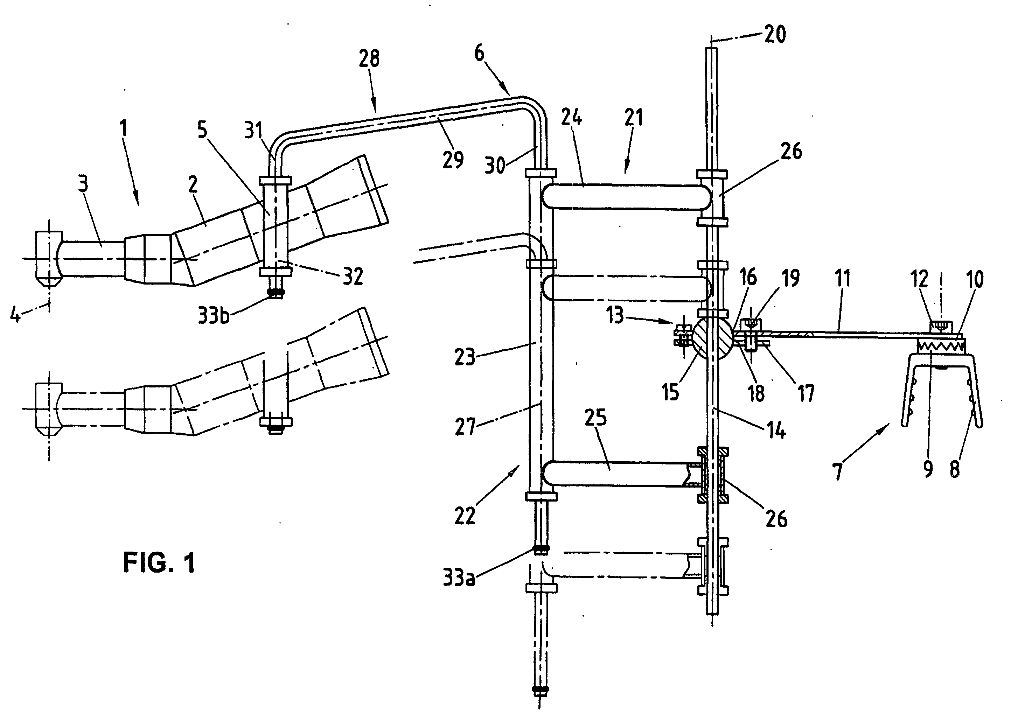

Das zahnärztliche Behandlungsgerät 1 besteht, wie aus Fig. 1 ersichtlich ist, aus einem als Handgriff ausgebildeten Gehäuse 2. An dieses Gehäuse 2 ist in bekannter Weise ein Werkzeugaufnahmeteil 3 anschliessbar, in welchem ein nicht dargestelltes Werkzeug eingesetzt werden kann, das ebenfalls in bekannter Weise über nicht dargestellte Antriebsmittel um eine Rotationsachse 4 in Rotation versetzbar ist.

Am Gehäuse 2 des zahnärztlichen Behandlungsgerätes 1 ist eine Lagerbüchse 5 befestigt, an welcher eine Parallelführungseinrichtung 6 angelenkt ist. Diese Parallelführungseinrichtung 6 dient als Verbindung zwischen dem zahnärztlichen Behandlungsgerät 1 und einem Befestigungselement 7, das am Kiefer des Patienten befestigt werden kann, in welchem sich der zu behandelnde Zahn befindet. Dieses Befestigungselement 7 umfasst einen sattelartig geformten Teil 8, der auf die Zähne des entsprechenden Kiefers des Patienten aufsetzbar und mit einer geeigneten Masse befestigbar ist. An diesem sattelartig geformten Teil 8 ist eine erste gerasterte Scheibe 9 befestigt, die mit einer eine entsprechende Rasterung aufweisenden zweiten Scheibe 10 zusammenwirkt, die am Ende eines Steges 11 befestigt ist. Über ein Spannelement, das als Schraube 12 ausgebildet ist, lässt sich der Steg 11 gegen den sattelartig geformten Teil 8 und somit die beiden Rasterscheiben 9 und 10 gegeneinander verspannen. In diesem verspannten Zustand, wie er in Fig. 1 dargestellt ist, wird der Steg 11 bezüglich des sattelartig geformten Teils 8 in einer eingestellten Lage festgehalten. Der Steg 11 kann bei gelöster Schraube 12 bezüglich des sattelartig geformten Teils 8 in einer Ebene verschwenkt werden und ist in dieser Ebene in jeder Lage fixierbar.

Am anderen Ende des Steges 11 ist eine weitere Halterung 13 angebracht, in welcher ein zylindrischer Stift 14 gehalten ist, der im mittleren Bereich mit einer kugelförmigen Verdickung 15 versehen ist. Diese weitere Halterung 13 besteht aus einer Öffnung 16, die im Steg 11 angebracht ist, und die einen geringeren Durchmesser aufweist, als die kugelförmige Verdickung 15. Die kugelförmige Verdickung 15 ist in diese Öffnung 16 eingesetzt. Die kugelförmige Verdickung 15 wird mittels einer Spannplatte 17, die ebenfalls eine Öffnung 18 aufweist, die ebenfalls einen geringeren Durchmesser hat, als die kugelförmige Verdickung 15, durch Spannmittel 19 in die Öffnung 16 des Steges gepresst. Bei gelöstem Spannmittel 19 lässt sich die kugelförmige Verdickung 15 in der Öffnung 16 drehen und schwenken, der zylindrische Stift 14 kann somit in eine beliebige winklige Position gebracht und in dieser Position durch Verspannen der Spannmittel 19 fixiert werden.

Durch den zylindrischen Stift 14 wird eine erste Achse 20 gebildet. Um diese Achse 20 schwenkbar gelagert und in Längsrichtung verschiebbar ist der erste Teil 21 eines Zwischenstücks 22. Dieser erste Teil 21 umfasst einen Hohlzylinder 23, an dessen Endbereichen jeweils ein Träger 24, 25 befestigt ist. Diese Träger 24 und 25 tragen jeweils eine Lagerbüchse 26, in welche der zylindrische Stift 14 eingesetzt ist.

Der Hohlzylinder 23 bildet eine Schwenkachse 27 für einen zweiten Teil 28 des Zwischenstückes 22. Dieser zweite Teil 28 besteht aus einem einen kreisförmigen Querschnitt aufweisenden Drahtstück 29, welches im wesentlichen U-förmig gebogen ist. Der eine Schenkel 30 ist hierbei in den Hohlzylinder 23 eingesetzt, während der andere Schenkel 31 ein zylindrisches Achsstück bildet, welches in die am Gehäuse 2 des Behandlungsgerätes 1 angebrachten Lagerbüchse 5 eingesetzt ist und die zweite Achse 32 bildet.

Die Schwenkachse 27 und die zweite Achse 32 sind parallel zur ersten Achse 20 ausgerichtet. Der erste Teil 21 ist, neben dem Verschwenken um die erste Achse 20 in Längsrichtung dieser ersten Achse 20 verschiebbar, wobei die kugelförmige Verdickung 15 als Anschlag für die Lagerbüchsen 26 dient und die Verschiebung in Längsrichtung begrenzt. Der zweite Teil 28 ist um die Schwenkachse 27 verschwenkbar und in Längsrichtung dieser Schwenkachse 27 verschiebbar. Am Ende des Schenkels 30 ist ein Anschlagelement 33a angebracht, welches verhindert, dass der Schenkel 30 aus dem Hohlzylinder 23 ausgefahren werden kann. Das zahnärztliche Behandlungsgerät 1 ist um die zweite Achse 32 schwenkbar und in Längsrichtung dieser zweiten Achse 32 verschiebbar, wobei auch hier ein Anschlagelement 33b angebracht ist, um zu vermeiden, dass der Schenkel 31 aus der Lagerbüchse 5 ausgefahren werden kann. Eine in Längsrichtung der Achsen verschobene Position des zahnärztlichen Behandlungsgerätes ist durch strichpunktierte Linien angegeben.

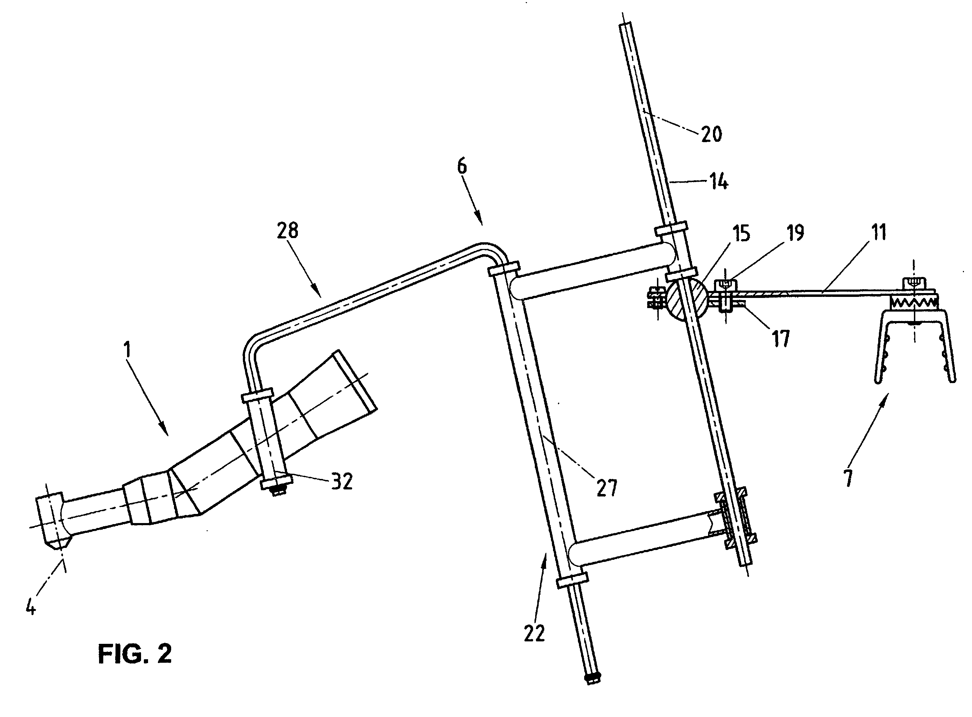

Wie aus Fig. 2 ersichtlich ist, kann der zylindrische Stift 14 bezüglich des Steges 11 in einer beliebigen winkligen Position eingestellt werden. Hierzu muss das Spannmittel 19 gelöst werden, die kugelförmige Verdickung 15 wird freigegeben, der zylindrische Stift 14 lässt sich in die gewünschte Position bringen, wobei diese Position der Lage der Rotationsachse 4 des zahnärztlichen Behandlungsgerätes 1 entspricht. Danach lässt sich das Spannmittel 19 spannen, die kugelförmige Verdickung 15 und demzufolge der zylindrische Stift 14 sind in der eingestellten winkligen Position fixiert.

Aus Fig. 1 und Fig. 2 ist ersichtlich, dass durch die Verwendung des U-förmig gebogenen Drahtstücks 29 für den zweiten Teil 28 der Parallelführungseinrichtung 6 der Vorteil erreicht wird, dass das zahnärztliche Behandlungsgerät 1 durch den Zahnarzt in optimaler Weise in der Hand gehalten werden kann, da dadurch der erforderliche Freiraum vorhanden ist.

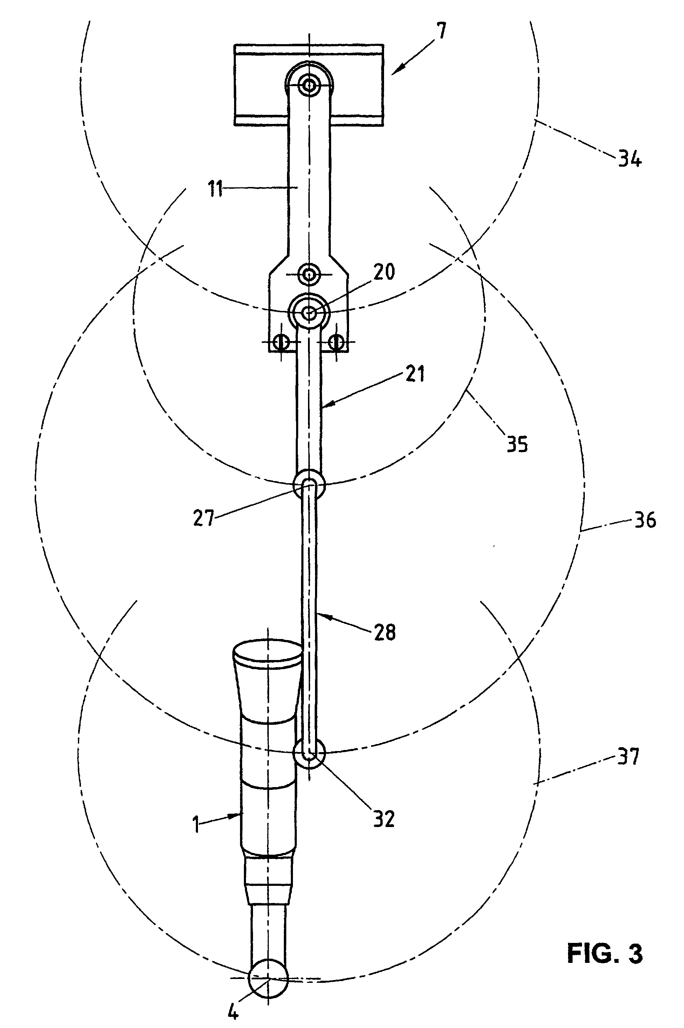

Wie aus Fig. 3 ersichtlich ist, ist der Steg 11 um das Befestigungselement 7 schwenkbar und in einer verschwenkten Position fixierbar. Der Schwenkbereich ist durch den strichpunktierten Kreisbogen 34 dargestellt. Der erste Teil 21 ist um die erste Achse 20 verschwenkbar, dargestellt durch den strichpunktierten Kreisbogen 35. Der zweite Teil 28 ist um die Schwenkachse 27 schwenkbar, dargestellt durch den strichpunktierten Kreisbogen 36. Das zahnärztliche Behandlungsgerät 1 schliesslich ist um die zweite Achse 32 schwenkbar, dargestellt durch den strichpunktierten Kreisbogen 37. Aus dieser Fig. 3 ist ersichtlich, dass für die Bewegung des nicht dargestellten Werkzeugs, das um die Rotationsachse 4 des zahnärztlichen Behandlungsgerätes 1 rotiert, ein grosser Freiraum geschaffen wird.

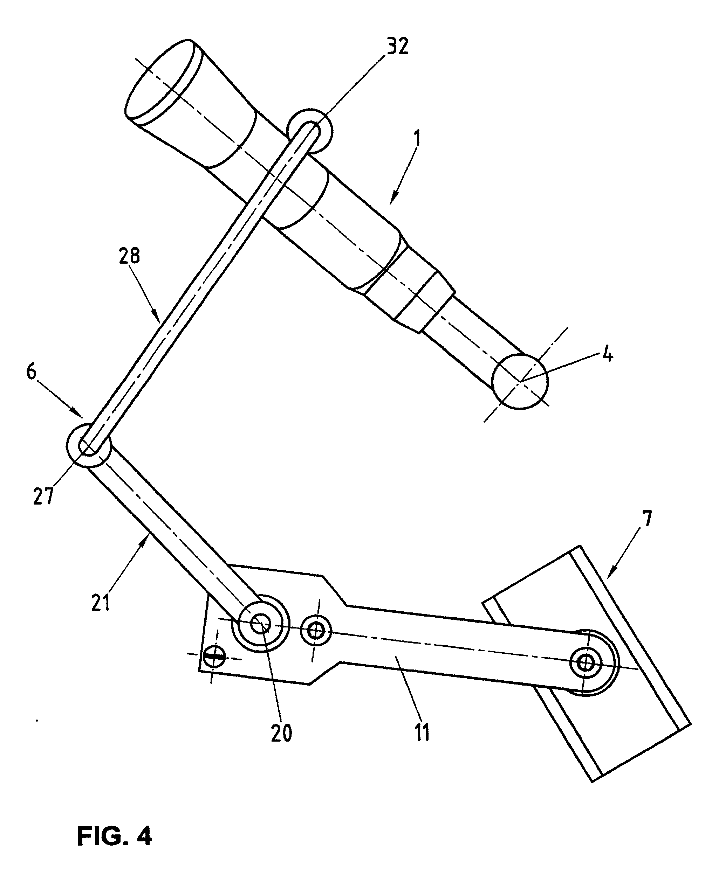

Fig. 4 zeigt das zahnärztliche Behandlungsgerät 1 bezüglich dem Befestigungselement 7 in einer Position, die einer tatsächlichen Bearbeitungsposition entsprechen kann. Dabei befindet sich die Parallelführungseinrichtung 6 ausserhalb des Mundes des Patienten, der Blick für den Zahnarzt auf das um die Rotationsachse 4 rotierende Werkzeug ist frei, und wie bereits erwähnt lässt sich das Behandlungsgerät 1 gut in der Hand halten.

Die Rotationsachse 4 des nicht dargestellten Werkzeugs befindet sich immer in paralleler Ausrichtung zur ersten Achse 20, die einstellbar ist und durch welche sich somit die Ausrichtung der Rotationsachse 4 festlegen lässt. Zur Bearbeitung einer konusförmigen Oberfläche am zu behandelnden Zahn kann ein konusförmiges Werkzeug verwendet werden, wobei der Konuswinkel dieses Werkzeugs dem Winkel des Konus der zu behandelnden Oberfläche entspricht. Dadurch lassen sich genau ausgerichtete Oberflächen erhalten, die den entsprechenden Flächen beispielsweise einer Krone entsprechen, wodurch ein optimaler Sitz dieser Krone auf dem bearbeiteten Zahn erreicht wird.

Da die Befestigung der Parallelführungseinrichtung 6 über das Befestigungselement 7 an den Zähnen des Kiefers erfolgt, in welchem sich der zu behandelnde Zahn befindet, ist die Parallelausrichtung des Werkzeugs immer gewährleistet, auch wenn der Patient den Kopf bewegt.

Durch diese erfindungsgemässe Einrichtung wird die Möglichkeit geboten, in einfacher Weise optimale und genaue Oberflächen am Zahn zu erhalten.

## Patentansprüche

1. Zahnärztliches Behandlungsgerät (1) mit einer Parallelführungseinrichtung (6), das aus einem als Handgriff ausgebildeten Gehäuse (2), einem ans Gehäuse (2) anschliessbaren Werkzeugaufnahmeteil (3), in welches ein Werkzeug einsetzbar ist, und Antriebsmitteln besteht, mit welchen das in den Werkzeugaufnahmeteil (4) eingesetzte Werkzeug in Rotation versetzbar ist, an welchem Behandlungsgerät (1) der eine Endbereich der Parallelführungseinrichtung (6) befestigbar ist, während der andere Endbereich mit einem Befestigungselement (7) verbunden ist, welches zur Befestigung am Kiefer des zu behandelnden Patienten bestimmt ist, an welchem eine Halterung angebracht ist, in welcher das eine Ende eines Steges (11) derart angelenkt ist, dass dieser im wesentlichen in einer Ebene um die Halterung schwenkbar und in jeder Position fixierbar ist, dass am anderen Ende des Steges (11) eine weitere als Spannvorrichtung (17, 19) ausgebildete Halterung (13) angebracht ist, **dadurch gekennzeichnet, dass** das Befestigungselement (7) aus einem sattelartig geformten Teil (8) gebildet ist, der am Ober- oder Unterkiefer befestigbar ist, und dass in der Halterung eine kugelige Verdickung eines eine erste Achse (20) bildenden zylindrischen Stiftes (14) gehalten ist, welche kugelige Verdickung im mittleren Bereich des zylindrischen Stiftes (14) angebracht ist, so dass dieser bezüglich der genannten Ebene winklig einstellbar ist, dass an diesem zylindrischen Stift (14) der eine Endbereich eines aus zwei Teilen (21, 28) bestehenden Zwischenstückes (22) um die erste Achse (20) schwenkbar gelagert ist, wovon der erste Teil (21) einen Hohlzylinder (23) aufweist, an dessen Endbereichen jeweils ein vom Hohlzylinder abstehender Träger (24, 25) befestigt ist, die jeweils eine Lagerbüchse (26) tragen, in welchen der zylindrische Stift (14) gelagert ist, und der zweite Teil (28) aus einem einen kreisförmigen Querschnitt aufweisenden Drahtstück (29) besteht, welches U-förmig gebogen ist, und der eine Schenkel (30) in den Hohlzylinder (23) eingesetzt ist und eine Schwenkachse (27) bildet, und der andere Schenkel (31) in eine weitere Lagerbüchse (5), die am Gehäuse (2) des Behandlungsgerätes (1) angebracht ist, schwenkbar eingesetzt ist und eine zweite Achse (32) bildet, dass die erste Achse (20), die zweite Achse (32) und die Schwenkachse (27) parallel zueinander ausgerichtet sind, und dass die Träger (24, 25) mit den Lagerbüchsen (26) in Längsrichtung der ersten Achse (20), der eine Schenkel (30) in Längsrichtung der Schwenkachse (27) und der andere Schenkel (31) in Längsrichtung der zweiten Achse (32) verschiebbar ist.

2. Zahnärztliches Behandlungsgerät nach Anspruch 1, **dadurch gekennzeichnet, dass** der zylindrische Stift (14) derart in den ersten Teil eingesetzt ist, dass die Verdickung (15) zwischen den beiden Lagerbüchsen (26) angeordnet ist.

3. Zahnärztliches Behandlungsgerät nach Anspruch 1 oder 2, **dadurch gekennzeichnet, dass** die Verschiebung des einen Schenkels (26) in Längsrichtung der Schwenkachse (27) und des anderen Schenkels (31) in Längsrichtung der zweiten Achse (32) jeweils durch Anschläge (33a, 33b) begrenzt ist.

4. Zahnärztliches Behandlungsgerät nach einem der Ansprüche 1 bis 3, **dadurch gekennzeichnet, dass** am Befestigungselement (7) eine erste gerasterte Scheibe (9) befestigt ist, welche mit einer eine entsprechende Rasterung aufweisenden zweiten Scheibe (10) zusammenwirkt, die am einen Ende des Steges (11) befestigt ist, und dass die beiden Scheiben (9, 10) gegeneinander durch ein Spannelement (12) verspannbar sind und der Steg (11) in der eingestellten Position fixiert ist.

## Claims

1. Dental treatment appliance (1) with a parallel guiding device (6), consisting of a housing (2) designed as a handle, a tool receiving part (3) connectable to the housing (2), in which a tool is insertable, and driving means, with which the tool inserted into the tool receiving part (4) is able to be brought into rotation, on which treatment appliance (1) the one end region of the parallel guiding device (6) is fixable, while the other end region is connected with a fastening element (7), which is intended for fastening to the jaw of the patient being treated, onto which a mounting device is fixed, into which the one end of a crosspiece (11) is coupled in such a way, that this crosspiece is substantially pivotable in a plane about the mounting device and is fixable in each position, that a further mounting device (13) designed as a fastening device (17, 19) is fixed on the other end of the crosspiece (11), **characterised in that** the fastening element (7) consists of a saddle-shaped part (8), that is fixable to the upper or lower jaw, and **in that** a spherical enlargement of a cylindrical pin (14) forming a first shaft (20) is fixed in the mounting device, which spherical enlargement is mounted in the middle area of the cylindrical pin (14), so that this pin is angularly adjustable with regard to the said plane, **in that** the one end is composed of a two-part (21, 28) interim piece (22) borne on this cylindrical pin (14) pivotable about the first shaft (20) wherein the first part (21) has a hollow cylinder (23), onto which a hollow cylindrical protruding support (24, 25) is fastened to each of the end areas, each carrying a bearing bush (26), into which the cylindrical pin (14) is borne, and the second part (28) consists of a wire piece (29) having a circular cross-section, which is bent into a U-shape, and that one leg (30) is fit into the hollow cylinder (23) and constitutes a pivoting shaft (27), and that the other leg (31) is fit pivotably into a further bearing bush (5), mounted on the housing (2) of the treatment appliance (1), and forms a second shaft (32), that the first shaft (20), the second shaft (32) and the pivot shaft (27) are aligned parallel to one another, and that the supports (24, 25) with the bearing bush (26) are displaceable in longitudinal direction of the first shaft (20), the one leg (30) is displaceable in longitudinal direction of the pivot shaft (27) and the other leg (31) is displaceable in longitudinal direction of the second shaft (32).

2. Dental treatment appliance (1) according to claim 1, **characterised in that** the cylindrical pin (14) is fit into the first part in such a way that the enlargement (15) is disposed between the both bearing bushes (26).

3. Dental treatment appliance (1) according to claim 1 or 2, **characterised in that** the displacement of the one leg (26) in longitudinal direction of the pivot shaft (27) and the displacement of the other leg (31) in longitudinal direction of the second shaft (32) is limited in each case by means of stops (33a, 33b).

4. Dental treatment appliance (1) according to one of the claims 1 to 3, **characterised in that** a first indexed disc (9) is fixed to the fastening element (7), which disc co-operates with a second disc (10) having a corresponding indexing, that is fixed to one end of the crosspiece (11), and **in that** both of the discs (9, 10) are braceable against each other by way of a tension element (12) and the crosspiece (11) is fixed in the set position.

## Revendications

1. Appareil de traitement dentaire (1) comportant un dispositif de guidage parallèle (6) constitué par un boîtier (2) réalisé sous forme de poignée, un porte-outil (3) pouvant être raccordé au boîtier (2) et dans lequel un outil peut être mis en place, et par des moyens d'entraînement grâce auxquels il est possible de mettre en rotation l'outil monté dans le porte-outil (3), l'une des parties terminales du dispositif de guidage parallèle (6) pouvant être fixée sur cet appareil de traitement (1) tandis que l'autre partie terminale est reliée à un élément de fixation (7) destiné à la fixation sur la mâchoire du patient, élément sur lequel est montée une fixation dans laquelle l'une des extrémités d'une traverse (11) est articulée de telle manière qu'elle puisse pivoter sensiblement dans un plan autour de la fixation et être immobilisée dans n'importe quelle position, avec à l'autre extrémité de la traverse (11) une autre fixation (13) réalisée sous la forme d'un dispositif de serrage (17, 19), **caractérisé en ce que** l'élément de fixation (7) est constitué par une pièce (8) en forme de selle qui peut être fixée sur la mâchoire supérieure ou inférieure, et **en ce qu'**un renflement sphérique d'une tige cylindrique (14) formant un premier axe (20) est tenue dans la fixation, ce renflement sphérique se trouvant dans la partie médiane de la tige cylindrique (14), de telle sorte qu'il est possible de régler l'angle que cette dernière forme avec le plan mentionné, que l'une des parties terminales d'une pièce intermédiaire (22) constituée de deux parties (21, 28) est montée sur cette tige cylindrique (14) de manière à pouvoir pivoter autour du premier axe (20), la première partie (21) présentant un cylindre creux (23) à chacune des extrémités duquel est fixé un support (24, 25) qui s'en écarte et supporte une bague de palier (26) dans laquelle est logée la tige cylindrique (14), et la deuxième partie (28) est constituée par un morceau de fil métallique (29) de section circulaire, cintré en forme de U, l'une des branches (30) étant placée dans le cylindre creux (23) et formant un axe de pivotement (27), l'autre branche (31) étant placée, de manière à pouvoir pivoter, dans une autre bague de palier (5) qui est fixée au boîtier (2) de l'appareil de traitement (1) et forme un deuxième axe (32), **en ce que** le premier axe (20), le deuxième axe (32) et l'axe de pivotement (27) sont parallèles et que les supports (24, 25) peuvent être déplacés avec les bagues de paliers (26) dans la direction longitudinale du premier axe (20), l'une des branches (30) dans la direction longitudinale de l'axe de pivotement (27) et l'autre branche (31) dans la direction longitudinale du deuxième axe (32).

2. Appareil de traitement dentaire selon la première revendication, **caractérisé en ce que** la tige cylindrique (14) est placée dans la première partie de telle manière que le renflement (15) se trouve entre les deux bagues de paliers (26).

3. Appareil de traitement dentaire selon la revendication 1 ou 2, **caractérisé en ce que** le déplacement de l'une des branches (26) dans la direction longitudinale de l'axe pivotant (27) et de l'autre branche (31) dans la direction longitudinale du deuxième axe (32) est limité par des butées (33a, 33b).

4. Appareil de traitement dentaire selon l'une des revendications 1 à 3, **caractérisé en ce qu'**un premier disque à crans (9) est monté sur l'élément de fixation (7), disque qui agit de concert avec un deuxième disque (10) présentant des crans correspondants, qui est fixéà une extrémité de la traverse (11), et **en ce que** les deux disques (9, 10) peuvent être serrés l'un contre l'autre par un élément de serrage (12) et que la traverse (11) est bloquée dans la position réglée.
